(19) Europäisches Patentamt / European Patent Office / Office européen des brevets

(11) **EP 4 015 332 B1**

(12) **FASCICULE DE BREVET EUROPEEN**

(45) Date de publication et mention de la délivrance du brevet:
**14.08.2024 Bulletin 2024/33**

(21) Numéro de dépôt: **21215587.3**

(22) Date de dépôt: **17.12.2021**

(51) Classification Internationale des Brevets (IPC):
**B60W 30/12** *(2020.01)* **B60W 30/16** *(2020.01)*
**B60W 50/00** *(2006.01)* **B60W 60/00** *(2020.01)*

(52) Classification Coopérative des Brevets (CPC):
**B60W 60/001; B60W 30/12; B60W 30/16; B60W 50/0098;** B60W 2050/0006; B60W 2050/0024; B60W 2520/10; B60W 2520/12; B60W 2552/00; B60W 2552/50; B60W 2552/53; B60W 2556/40; B60W 2556/50; B60W 2720/10; B60W 2754/30

(54) **MÉTHODE DE SUPERVISION POUR LE CONTRÔLE D'UN VÉHICULE AUTOMOBILE AUTONOME**

ÜBERWACHUNGSMETHODE ZUR STEUERUNG EINES AUTONOMEN KRAFTFAHRZEUGS

MONITORING METHOD FOR CONTROLLING AN AUTONOMOUS MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020 FR 2013419**

(43) Date de publication de la demande:
**22.06.2022 Bulletin 2022/25**

(73) Titulaire: **Ampere SAS**
**92100 Boulogne-Billancourt (FR)**

(72) Inventeurs:
• **ATOUI, Hussam**
**78084 GUYANCOURT (FR)**
• **MAHTOUT, Imane**
**78084 GUYANCOURT (FR)**
• **MARTINEZ, John-Jairo**
**38570 Goncelin (FR)**
• **MILANES, Vicente**
**78084 Guyancourt (FR)**

• **SENAME, Olivier**
**38100 Grenoble (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 3 466 785**   **FR-A1- 3 044 994**
**US-A1- 2019 001 976**   **US-A1- 2020 156 639**

• **SCHNELLE SCOTT ET AL: "A feedforward and feedback integrated lateral and longitudinal driver model for personalized advanced driver assistance systems", MECHATRONICS, PERGAMON PRESS, OXFORD, GB, vol. 50, 6 March 2018 (2018-03-06), pages 177 - 188, XP085370590, ISSN: 0957-4158, DOI: 10.1016/J.MECHATRONICS.2018.02.007**

## Description

## Domaine technique

La présente invention concerne une méthode de supervision pour le contrôle d'un véhicule automobile, un dispositif de supervision, un produit programme d'ordinateur comportant des instructions de programme exploitables par ledit dispositif de supervision et un véhicule automobile autonome comportant ledit dispositif de supervision.

## Technique antérieure

Ces dernières années, les progrès réalisés dans l'équipement des véhicules automobiles en système d'assistance au conducteur ont contribué à une amélioration significative de la sécurité routière. Le défi du futur est de concevoir des véhicules automobiles autonomes. Un véhicule automobile autonome est un véhicule automobile adapté pour rouler sur une route ouverte sans ou avec peu d'intervention d'un conducteur. Le concept vise à développer et à produire un tel véhicule pouvant à terme circuler en toute sécurité sur une voie publique et ceci quel que soit le trafic généré par d'autres véhicules ou des obstacles (humain, animal, arbre...) présents sur la voie. La notion de véhicule automobile autonome couvre ici un véhicule automobile totalement autonome dans lequel l'intervention d'un opérateur humain n'est pas nécessaire pour la conduite dudit véhicule. Cette notion couvre également un véhicule automobile dit « semi-autonome » disposant de systèmes automatisés d'aide à la conduite mais dans lequel l'intervention de l'opérateur humain reste globalement importante.

Le fonctionnement d'un véhicule automobile autonome est généralement régi conjointement par un dispositif de navigation embarqué et par un dispositif de définition d'une trajectoire de référence. Le dispositif de navigation embarqué est conçu pour programmer un itinéraire à grande échelle, c'est-à-dire à l'échelle d'un réseau routier. Cet itinéraire comprend une série de segments de route consécutifs adaptés pour relier une position d'origine à une destination. Cette série de segments de route est éventuellement variable dynamiquement en fonction des conditions de circulation détectées ou des contraintes de déplacement prédéfinies du réseau routier (fermeture de certains tronçons pour travaux en cours, par exemple).

Le dispositif de définition de trajectoire de référence est quant à lui conçu pour traiter automatiquement des trajectoires de déplacement de véhicules à l'échelle locale, de l'ordre de plusieurs dizaines ou centaines de mètres. Ce dispositif de définition de trajectoire de référence est adapté pour mettre en oeuvre l'itinéraire programmé par le système de navigation. Cette mise en oeuvre est réalisée en déterminant la position, la direction et la vitesse du véhicule au fil du temps en fonction des contraintes de mouvement, telles que des contraintes dynamiques du véhicule automobile (vitesse maximale, accélération longitudinale, angle de braquage, etc...), des contraintes environnementales (obstacles sur la route, etc...) ou des contraintes d'optimisation (minimisation de l'accélération latérale du véhicule automobile, par exemple).

Dans un contexte de conduite autonome, un véhicule automobile est agencé pour suivre un itinéraire urbain ou extra-urbain prédéfini en parcourant une série de tronçons de route déterminée par le dispositif de navigation embarqué. La trajectoire de référence est définie par un ensemble de coordonnées cartésiennes variables dans le temps et calculées en temps réel en fonction du tronçon de route au niveau duquel l'itinéraire prédéfini est atteint et de paramètres environnementaux. La mise en oeuvre de ce calcul peut se faire à l'aide d'un dispositif de reconnaissance de marquages routiers, des moyens de détection radar ou laser, d'un dispositif de reconnaissance d'obstacles etc.... Au cours du roulage, le véhicule automobile suit une trajectoire réelle qui peut être différente de la trajectoire de référence. En effet, au cours de ce roulage, le véhicule automobile subit un certain nombre de contraintes (pression des roues, dénivelé de la route, force du vent, etc...) qui peuvent ne pas été intégré par le dispositif de définition de la trajectoire de référence. Dès lors, il peut exister un décalage entre cette trajectoire réelle et la trajectoire de référence qu'il convient de minimiser. Il est possible de corriger ce décalage par une supervision appropriée du véhicule automobile autonome.

Le document EP3514651 divulgue un dispositif de contrôle pour la gestion de la trajectoire d'un véhicule automobile autonome. Pour cela, le dispositif de contrôle comprend un contrôleur de cap de distance et un contrôleur de cap de référence, en vue de déterminer un cap cible. Le cap cible combine le signal de sortie du contrôleur de cap de distance et le signal de sortie du contrôleur de cap de référence à l'aide d'un algorithme de pondération qui attribue à chacune de ces sorties des poids différents. Dans ce document, le véhicule autonome est un engin agricole destiné à rouler dans les champs et le nombre de contrôleur utilisé est limité. Le dispositif de contrôle qui y est ainsi associé est peu adapté aux contraintes d'un véhicule automobile autonome roulant sur une route où les interactions (trafic, piétons, etc...) sont nombreuses.

Il existe donc un besoin de proposer un dispositif de supervision et une méthode associée qui permettent d'améliorer les performances et l'intelligence d'un véhicule automobile autonome en vue de faire face à des situations critiques. Dans un but similaire, le document US 2019/001976 A divulgue des coefficients variables, alors que le document « A feedforward and feedback intégrated latéral and longitudinal driver model for personalized advanced driver assistance systems" (Schnelle Scott et al.) divulgue une supervision longitudinale et latérale.

## Exposé de l'invention

La présente invention vise à remédier au moins en partie à ce besoin.

Plus particulièrement, la présente invention vise à améliorer la supervision dans le contrôle d'un véhicule automobile autonome.

Un premier objet de l'invention concerne une méthode de supervision pour le contrôle d'un véhicule automobile autonome selon au moins deux types de supervision. La méthode de supervision comprend une étape de réception d'une décision générale de contrôle générées à partir d'une pluralité de données d'entrée et une étape de transmission d'une pluralité de commandes particulières de contrôle, chaque commande particulière de contrôle étant associée à une des aux moins deux types de supervision. La méthode de supervision comprend, préalablement à l'étape de transmission de la pluralité de commandes particulières de contrôle, une étape de génération de coefficients de commutation à partir de la décision générale de contrôle et pour chaque commande particulière de contrôle, une étape de génération de ladite décision particulière de contrôle à partir de fonctions de base du type de supervision considéré. Les fonctions de base sont pondérées par tout ou partie des coefficients de commutation, chaque fonction de base étant représentative d'un contrôleur conçu spécifiquement pour un fonctionnement particulier du véhicule automobile autonome.

Ainsi, l'invention propose de réaliser la supervision à partir d'au moins deux types de supervision, chaque type de supervision étant lié à un contrôleur particulier du véhicule automobile autonome. Pour chaque type de supervision, une pondération est effectuée entre différentes fonctions de base à l'aide de coefficients de commutation. Chaque fonction de base représente une règle de fonctionnement. Chaque règle de fonctionnement est adaptée à une situation de roulage particulière. En fonction des données d'entrée, les règles de fonctionnement les plus adaptées sont mises en avant par les coefficients de commutation pour la génération des commandes particulières pour chaque contrôleur. La méthode de supervision peut ainsi gérer tout mouvement critique par interpolation entre les différents contrôleurs.

Dans un autre mode de réalisation particulier, les données d'entrée sont choisies parmi une liste de données d'entrée comprenant des données de perception, des données de navigation, des données de localisation.

Dans un autre mode de réalisation, les au moins deux types de supervision sont choisis parmi une liste de types de supervision comprenant une supervision longitudinale, une supervision latérale, une supervision de suspension.

Dans un autre mode de réalisation, chaque coefficient de commutation a une valeur comprise entre zéro et un. La somme des coefficients de commutation utilisés pour la génération de la commande particulière est égale à un.

Dans un autre mode de réalisation, l'étape de génération de la commande particulière utilise un schéma de paramétrisation de Youla-Kucera.

Dans un autre mode de réalisation, les coefficients de commutation appartiennent à un signal de commutation, ledit signal de commutation comprenant une liste de caractères et/ou de virgules flottantes et/ou de nombres binaires.

Un autre objet de l'invention concerne un dispositif de supervision pour le contrôle d'un véhicule automobile autonome à partir d'au moins deux types de supervision. Le dispositif de supervision comprend un bloc de génération de coefficients de commutation à partir d'une décision générale de contrôle reçue par ledit bloc, ladite décision générale de contrôle étant générée préalablement à partir d'une pluralité de données d'entrée. Le dispositif de supervision comprend au moins un bloc de supervision d'un des deux types de supervision, ledit bloc de supervision étant adapté pour générer une commande particulière à partir de fonctions de base du type de supervision considéré. Les fonctions de base sont pondérées par tout ou partie des coefficients de commutation, chaque fonction de base étant représentative d'un contrôleur conçu spécifiquement pour un fonctionnement particulier du véhicule automobile autonome pour le type de supervision considéré.

Un autre objet de l'invention concerne un programme d'ordinateur comportant des instructions de programme exploitables par le dispositif de supervision, qui lorsqu'elles sont exécutées ou interprétées par ce dispositif de supervision déclenchent la mise en oeuvre de la méthode de supervision dans un véhicule automobile autonome.

Un autre objet de l'invention concerne un véhicule automobile autonome comportant un dispositif de supervision.

La présente invention sera mieux comprise à la lecture de la description détaillée de modes de réalisation pris à titre d'exemples nullement limitatifs et illustrés par les dessins annexés sur lesquels :

[**Fig 1**] la figure 1 est une vue schématique illustrant un véhicule automobile autonome conforme à l'invention ;

[**Fig 2**] la figure 2 illustre le véhicule automobile autonome de la figure 1 en fonctionnement sur une route ;

[**Fig 3**] la figure 3 est un schéma illustrant le dispositif de supervision pour le contrôle du véhicule automobile autonome de la figure 1 sur la route de la figure 2 ;

[**Fig 4**] la figure 4 est un schéma détaillant un module de supervision du dispositif de supervision de la figure 3 ;

[Fig 5] la figure 5 est un schéma détaillant un bloc de supervision longitudinal du module de supervision de la figure 4 ;

[Fig 6] la figure 6 illustre les différentes étapes d'une méthode de supervision pour contrôler le véhicule automobile de la figure 1 sur la route de la figure 2.

L'invention n'est pas limitée aux modes de réalisation et variantes présentées et d'autres modes de réalisation et variantes apparaîtront clairement à l'homme du métier.

Sur les différentes figures, les éléments identiques ou similaires portent les mêmes références.

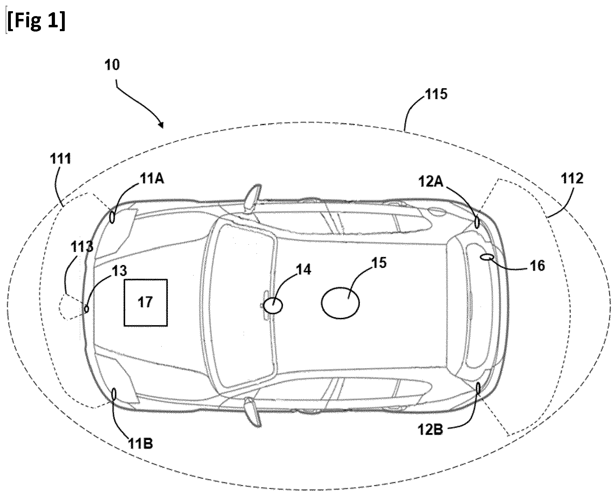

La figure 1 représente schématiquement une vue de dessus d'un véhicule automobile 10 conforme à la présente invention. Ce véhicule automobile 10 comprend une partie avant de véhicule, une partie arrière de véhicule, un toit de véhicule, un intérieur de véhicule, des moyens de direction (non représentés). Le véhicule automobile comprend également un châssis et un ou plusieurs panneaux de carrosserie montés ou fixés sur ledit châssis.

Le véhicule automobile 10 est ici un véhicule autonome. Par véhicule autonome, on entend un véhicule automobile totalement autonome ou semi-autonome. Il existe en effet plusieurs niveaux d'autonomie dans un véhicule automobile.

Dans un premier niveau, dit niveau 1, le véhicule automobile est responsable d'un nombre limité d'opérations de conduite associées audit véhicule automobile. Le conducteur reste alors responsable de la plupart des opérations de contrôle de conduite. Dans le niveau 1, les opérations de commande d'accélération et/ou de freinage (régulateur de vitesse, etc...) sont commandées par le véhicule automobile. Ce niveau 1 correspond à un niveau d'assistance à la conduite.

Dans un second niveau, dit niveau 2, le véhicule automobile est adapté pour collecter des informations (par exemple, via un ou plusieurs systèmes d'aide à la conduite, des capteurs, etc...) sur l'environnement externe (la route autour du véhicule automobile, le trafic routier, les conditions ambiantes). Dans ce niveau 2, le véhicule autonome est adapté pour utiliser les informations collectées afin de contrôler certaines opérations de conduite (par exemple, la direction, l'accélération, et/ou le freinage). Ce niveau 2 est un niveau d'automatisation partielle du véhicule automobile. Il convient de noter que pour le niveau 1 et le niveau 2, le conducteur doit conserver la pleine surveillance des opérations de conduite effectuées par le véhicule automobile autonome.

Dans un troisième niveau, dit niveau 3, le conducteur délègue toutes les opérations de conduite au véhicule automobile sauf lorsque ledit véhicule automobile demande au conducteur d'agir ou d'intervenir pour contrôler une ou plusieurs de ces opérations de conduite. Ce niveau 3 est un niveau d'automatisation conditionnelle.

Dans un quatrième niveau, dit niveau 4, le conducteur ne gère plus aucune opération de conduite. C'est le véhicule automobile qui contrôle alors l'ensemble de des opérations de conduite, y compris lorsque le conducteur ne répond pas à une demande d'intervention. Le niveau 4 est un niveau d'automatisation élevée.

Dans un cinquième niveau, dit niveau 5, le véhicule automobile contrôle toutes les opérations de conduite. Le véhicule automobile surveille ainsi au cours du roulage le trafic routier, les acteurs mobiles sur la route (êtres humains, animaux), les obstacles immobiles sur la route. A ce niveau 5, aucune interaction avec un conducteur humain n'est requise. Le niveau 5 est le niveau d'automatisation complète. Il convient de noter que pour les niveaux 3 à 5, le véhicule automobile est adapté pour surveiller les opérations de conduite ainsi que pour surveiller l'environnement externe audit véhicule automobile.

Pour pouvoir réaliser les différentes opérations de conduite dans ces différents niveaux d'autonomie, le véhicule automobile 10 comprend un certain nombre de capteurs tels que :

- un radar avant 11A, 11B ;
- un radar arrière 12A, 12B;
- un capteur ultrasons 13 ;
- une caméra vidéo 14 ;
- un LIDAR 15;
- une antenne GPS 16.

Le radar avant comprend deux éléments de radar avant 11A, 11B disposés sur la partie avant de véhicule de part et d'autre d'un axe de symétrie dudit véhicule automobile 10. Le radar avant possède une zone de détection 111 à l'avant du véhicule automobile. Il est ainsi adapté pour détecter les positions des objets environnants. Il permet de mesurer la vitesse du véhicule automobile. Les informations recueillies par le radar avant 11A, 11B sont particulièrement utiles pour mettre en oeuvre certaines opérations de conduite telles que le freinage d'urgence ou l'anti-franchissement de bandes centrales.

Le radar arrière comprend deux éléments de radar arrière 12A, 12B disposés sur la partie arrière de véhicule de part et d'autre de l'axe de symétrie dudit véhicule automobile 10. Le radar arrière possède une zone de détection 112 à l'arrière du véhicule automobile. Il est ainsi adapté pour détecter les positions des objets environnants. Il permet de mesurer la vitesse des autres véhicules automobiles qui suivent ledit véhicule automobile 10. Les informations recueillies par le radar arrière 12A, 12B sont particulièrement utiles pour mettre en oeuvre certaines opérations de conduite telles que le freinage d'urgence ou l'anti-franchissement de bandes centrales.

Le capteur ultrasons 13 est disposé sur la partie avant du véhicule entre les deux éléments de radar avant 11A, 11B. Le capteur ultrasons 13 possède une zone de détection 113 beaucoup plus faible que la zone de détection 111 du radar avant 11A, 11B. Ce capteur à ultrasons 13 est ainsi adapté pour détecter des obstacles très proches. Les informations recueillies sont particulièrement utiles pour mettre en oeuvre des opérations de conduite telles que le maintien d'un écart de sécurité avec un autre véhicule automobile précédent directement ledit véhicule automobile 10.

La caméra vidéo 14 est située ici derrière le rétroviseur. Les informations recueillies par cette caméra vidéo 14 sont particulièrement utiles pour la mise en oeuvre de certaines opérations de conduite telles que le déchiffrage des panneaux de signalisation, le repérage des bordures et des bandes centrales, la détection d'acteurs mobiles sur la route (êtres humains, animaux).

Le LIDAR 15 (pour « LIght Détection And Ranging » en anglais) est un capteur situé ici sur le toit du véhicule automobile 10. Il permet d'effectuer des mesures de télédétection par laser. La télédétection par laser est une technique de mesure à distance fondée sur l'analyse des propriétés d'un faisceau de lumière renvoyé vers son émetteur. Le LIDAR possède une zone de détection 115 assez large, par exemple de l'ordre de 50 mètres de diamètre. Il permet de scanner en permanence l'environnement à 360° pour en faire une cartographie en 3D. Les informations recueillies par le LIDAR 15 sont utiles pour la mise en oeuvre de certaines opérations de conduite telles que la détection d'obstacles, y compris la nuit.

L'antenne GPS 16 est située sur la partie arrière du véhicule automobile 10. Elle permet de recevoir des signaux GPS (pour « Global Positioning System » en anglais). Les données de navigation peuvent alors être mises à jour dans le véhicule automobile 10 à partir de ces signaux GPS.

Le véhicule automobile comprend également un ordinateur central 17 adapté pour traiter les différentes données des capteurs 11A, 11B, 12A, 12B, 13, 14, 15, 16. L'ordinateur central 17 et les capteurs 11A, 11B, 12A, 12B, 13, 14, 15, 16 sont reliés dans le véhicule automobile par un ou plusieurs réseaux (non représentés) de type bus CAN (pour « Controller Area Network » en anglais) pour le transport desdites données des capteurs.

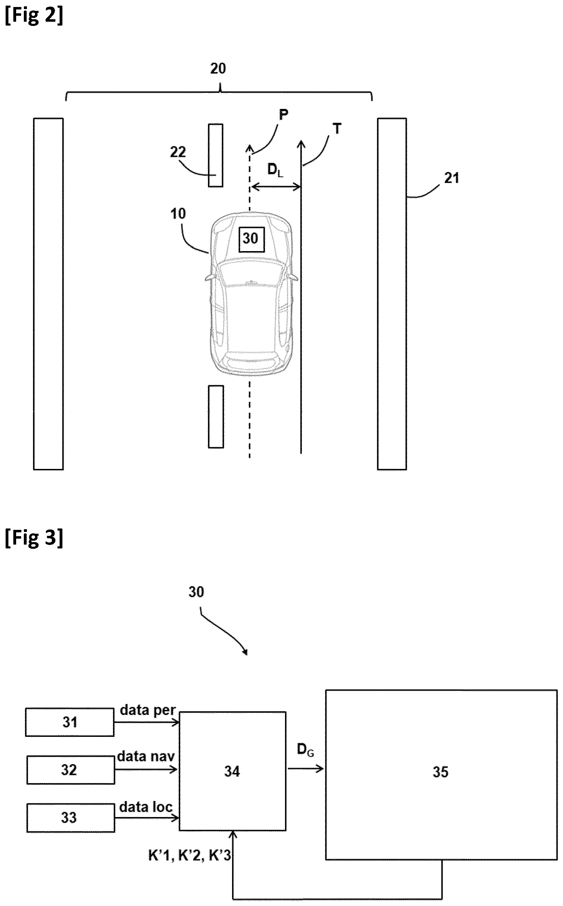

La figure 2 illustre le véhicule automobile autonome de la figure 1 sur une route 20. Afin de simplifier cette illustration, les capteurs 11A, 11B, 12A, 12B, 13, 14, 15, 16 n'ont pas été représentés sur la figure 2. La route 20 est délimitée par deux bordures 21. Elle est de plus divisée en deux voies séparées par une pluralité de bandes centrales 22. Sur la figure 2, le véhicule roule sur la voie de droite en suivant une trajectoire réelle P. Cette trajectoire réelle P est ici décalée d'un décalage latéral $D_L$ par rapport à une trajectoire prédéterminée T. La trajectoire prédéterminée T a été préalablement calculée par le système de navigation du véhicule automobile 10, notamment à partir des données des signaux GPS reçues par l'antenne GPS 16. Cette trajectoire prédéterminée T s'étend ici à mi-distance entre la bordure 21 et les bandes centrales 22. L'invention a pour but de minimiser le décalage latéral $D_L$. Pour cela, le véhicule automobile 10 comprend un système de contrôle adapté 30 illustré à la figure 3. Ce système de contrôle 30 est dans un mode de réalisation préférentiel intégré directement dans l'ordinateur central 17 du véhicule automobile.

La figure 3 un schéma illustrant le dispositif de supervision 30 pour le contrôle du véhicule automobile 10. Ce dispositif de supervision 30 comprend :

- un bloc 31 de perception ;
- un bloc 32 de navigation ;
- un bloc 33 de localisation ;
- un bloc 34 de génération d'une décision ;
- un module de supervision 35.

Le bloc 31 de perception est adapté pour délivrer des données d'entrée de perception data per. Pour cela, le bloc 31 de perception est apte à recueillir des informations sur l'environnement du véhicule, telles que les objets mobiles/immobiles, les feux de circulation, le marquage de voies, etc.

Le bloc 32 de navigation est adapté pour délivrer des données d'entrée de navigation data nav. Plus particulièrement, le bloc 32 de navigation est apte à dessiner une carte appropriée sur laquelle le véhicule peut se déplacer ainsi que des informations sur les contraintes de la route.

Le bloc 33 de localisation est adapté pour délivrer des données d'entrée de localisation data loc. Ces données concernent, par exemple, la position du véhicule, sa vitesse et son accélération dans toutes les directions.

Ces blocs 31, 32, 33 sont alimentés par les différents capteurs 11A, 11B, 12A, 12B, 13, 14, 15, 16 de la figure 2.

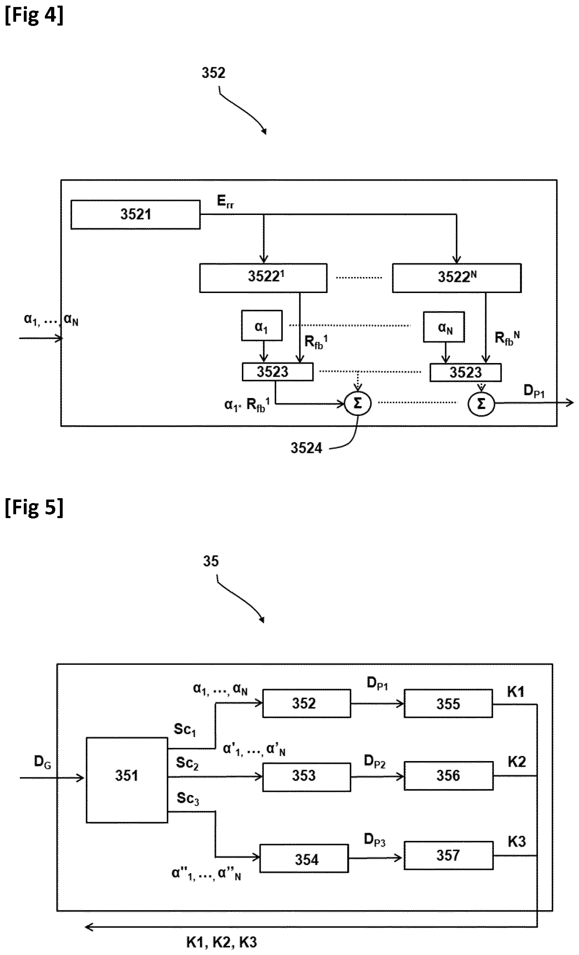

Le bloc 34 est adapté pour recevoir les données d'entrée data per, data nav, data loc des différents blocs 31, 32, 33. Le bloc 34 est également adapté pour recevoir des commandes K'1, K'2, K'3 provenant du module de supervision 35. Comme il est visible sur la figure 4, la commande K'1 est associée à une commande longitudinale 355, la commande K'2 est associée à une commande latérale 356 et la commande K'3 est associée à une commande de suspension 357. Plus précisément, ces commandes K'1, K'2, K'3 ont été déterminées au précédent cycle de supervision à t-1. Ainsi, à partir de ces différentes informations, data per, data nav, data loc, K'1, K'2, K'3, le bloc 34 est apte à générer une décision générale $D_G$. Cette décision générale $D_G$ a pour but de prédire, à un instant t, la situation du véhicule autonome dans le futur.

Le module de supervision 35 est apte à recevoir la décision générale $D_G$ A partir de cette décision générale, le module de supervision 35 fournit en sortie les commandes K1, K2, K3 associées à l'instant t.

La figure 5 illustre de manière plus détaillée le module de supervision 35. Ainsi, ce module de supervision 35 comprend :

- un bloc 351 de génération de coefficients de commutation ;
- un module 352 de supervision longitudinale ;
- un module 353 de supervision latérale ;
- un module 354 de supervision de suspension ;
- une commande longitudinale 355 ;
- une commande latérale 356 ;
- une commande de suspension 357.

Le bloc 351 est adapté pour générer différents coefficient de commutation, $\alpha_1, ..., \alpha_N$; $\alpha'_1, ..., \alpha'_N$ ; $\alpha''_1, ..., \alpha''_N$. Chacun de ces coefficients a une valeur comprise entre zéro et un. Ces différents coefficients de commutation sont portés par des signaux de commutation $S_{C1}$, $S_{C2}$, $S_{C3}$. Ainsi, des premiers coefficients de commutation $\alpha_1$, $\alpha_2$, $\alpha_3$ sont portés par un premier signal de commutation $S_{C1}$. Des seconds coefficients de commutation $\alpha'_1, ..., \alpha'_N$ sont portés par un second signal de commutation $S_{C2}$. Enfin, des troisièmes coefficients de commutation $\alpha''_1, ..., \alpha''_N$ sont portés par un troisième signal de commutation $S_{C3}$. On notera que pour chaque signal de commutation, la somme des coefficients de commutation portés par ce signal est égale à 1. On notera également que chaque signal de commutation comprend une liste de caractères et/ou de virgules flottantes et/ou de nombres binaires qui décrit la décision générale prise.

Avec une liste de caractère, le signal de commutation indique une tâche générale que doit accomplir le véhicule, par exemple un retour à la trajectoire de référence en douceur ou de manière agressive, un changement de voie lente ou rapide, un évitement des collisions lointain ou urgent, un stationnement, une initialisation du mode autonome, une diminution des bruits d'accélération latérale, ou un freinage brusque, etc.

Avec une liste de virgules flottantes, le signal de commutation représente toutes les informations du véhicule autonome, c'est-à-dire la position, la vitesse latérale/longitudinale, l'accélération latérale/longitudinale, la variation de paramètres du véhicule (masse, estimation de la rigidité des pneumatiques, etc...). En outre, le signal de commutation donne des informations sur l'environnement telles que : les objets fixes/mobiles utilisant des caméras, le LIDAR (véhicules, piétons, etc.), les conditions de la route (trous, frottement, pente, humidité, feux de circulation, lignes de voie, etc.

Avec une liste de nombres binaires, le signal de commutation permet de fournir les conditions de conduite adaptées à certaines situations, telles que la conduite sport ou la conduite classique, les appels d'urgence, etc.

Le module 352 de supervision longitudinale est adapté pour fournir une supervision longitudinale. Il est ainsi apte à recevoir le premier signal de commutation $S_{C1}$ comprenant les premiers coefficients de commutation $\alpha_1, ..., \alpha_N$. Ce module 352 délivre une première commande particulière $D_{P1}$. Cette première commande particulière $D_{P1}$ est donc liée à la supervision longitudinale. Cette supervision longitudinale peut, par exemple, concerner le suivi d'un véhicule de tête, le suivi de la vitesse optimale, l'engagement d'un véhicule de tête, etc. Les paramètres qui affectent chacun de ces tâches pourraient être :

- pour le suivi du véhicule de tête : une distance par rapport au véhicule de tête, la vitesse du véhicule de tête et du véhicule autonome, une amplitude de freinage, etc.
- pour le suivi de la vitesse optimale : un taux d'accélération, une distance de sécurité par rapport au véhicule de tête, une force de freinage, des bruits et des secousses lors d'accélération, etc.
- pour l'engagement du véhicule de tête : une distance par rapport au véhicule de tête, une vitesse du véhicule de tête et du véhicule autonome, un déplacement latéral du véhicule de tête, etc.

Le module 353 de supervision latérale est adapté pour fournir une supervision latérale. Il est ainsi apte à recevoir le second signal de commutation $S_{C2}$ comprenant les seconds coefficients de commutation $\alpha'_1, ..., \alpha'_N$. Ce module 353 délivre une seconde commande particulière $D_{P2}$. Cette seconde commande particulière $D_{P2}$ est donc liée à la supervision latérale. La supervision latérale permet un contrôle latéral. Ce contrôle latéral est principalement responsable du suivi de la voie, du changement de voie, de l'évitement des collisions, du stationnement, de l'initialisation du mode autonome, etc. Les paramètres effectifs correspondant à chaque tache sont :

- pour un suivi de la trajectoire : une erreur latérale par rapport au centre la voie, une erreur angulaire, un angle de braquage, une angle de vitesse, un angle d'accélération, une courbe de la route à venir, une vitesse du véhicule, etc.
- pour un changement de voie : une erreur latérale par rapport au centre de la voie souhaitée, une erreur angulaire, un angle de la direction, une vitesse de la direction, une accélération de la direction, une vitesse du véhicule, une distance de sécurité par rapport aux autre véhicules, etc.
- pour un évitement des collisions : une distance par rapport à l'obstacle, une vitesse du véhicule, une information sur la possibilité de freiner ou surmonter un obstacle, des capacités minimale et maximale de direction/freinage, une distance de sécurité autour de l'obstacle, une vitesse et un mouvement de l'obstacle mobile, une erreur latérale par rapport à la voie souhaitée, etc.
- pour un stationnement : une distance par rapport à la limite de la voie, une surface de stationnement disponible, des informations indiquant si le stationnement doit être effectué parallèlement ou perpendiculairement, une distance de sécurité par rapport aux véhicules stationnés, des erreurs des véhicules par rapport à une trajectoire de stationnement, une vitesse de stationnement, des retards/décalages de la direction, etc.

- pour une initialisation du mode autonome : une distance par rapport au centre de la voie, une erreur angulaire, une vitesse du véhicule, un angle de direction, une vitesse de direction, une accélération de direction, une courbure de la route.

Le module 354 de supervision de suspension est adapté pour fournir une supervision de suspension. Il est ainsi apte à recevoir le troisième signal de commutation $S_{C3}$ comprenant les troisièmes coefficients de commutation $\alpha''_1, ..., \alpha''_N$. Ce module 354 délivre une troisième commande particulière $D_{P3}$. Cette troisième commande particulière $D_{P3}$ est donc liée à la supervision de suspension. Le contrôle de la suspension vise à réguler le mouvement de dérapage du véhicule autonome, le contrôle du patinage des roues, le contrôle de la vitesse de lacet, la prévention du renversement (en particulier pour les véhicules lourds). Pour chaque tâche, les paramètres définis peuvent être exprimés sous la forme suivante :

- Pour une régulation du mouvement de glissement latéral : un angle de glissement latéral, un vitesse latérale, une accélération latérale, une estimation du frottement de la route, etc.
- Pour un contrôle du patinage des roues : un angle de patinage latéral, un type de revêtement, une estimation du frottement de la route, etc.
- Pour une prévention du retournement : un indice de retournement, un angle de roulis, une vitesse du véhicule, un centre de masse, etc.

La figure 5 illustre en détail le bloc 352 de supervision longitudinale. La description ci-dessous s'appliquera mutatis mutandis au bloc 353 de supervision latérale et au bloc 354 de supervision de suspension.

Ce bloc 352 de supervision longitudinale comprend :

- un bloc 3521 de suivi d'erreur ;
- une pluralité de blocs $3522^1, ..., 3522^N$ de fonctions de base ;
- une pluralité de blocs de commutation $\alpha_1, ..., \alpha_N$;
- une pluralité de blocs 3523 de multiplication ;
- une pluralité de blocs 3524 de sommation.

Le bloc 3521 de suivi d'erreur est adapté pour stocker les erreurs à minimiser dans le cadre de la supervision longitudinale.

Chaque bloc de la pluralité de blocs $3522^1, ..., 3522^N$ est adapté pour recevoir une erreur $E_{rr}$ à minimiser pour la supervision longitudinale. Chaque bloc de la pluralité de blocs $3522^1, ..., 3522^N$ comprend respectivement une des fonctions de base. Chaque fonction de base représente un contrôleur conçu spécifiquement pour un fonctionnement particulier du véhicule automobile autonome. Par exemple, la fonction de base du bloc

$3522^1$ est associée à un freinage de faible intensité. De la même manière, la fonction de base du bloc $3522^N$ est associée à un freinage de forte intensité. Les blocs intermédiaires entre le bloc $3522^1$ et le bloc $3522^N$ comprennent des fonctions de base associées à des nuances d'intensité de freinage comprises entre le freinage de faible intensité et le freinage de forte intensité. Chaque bloc 3522' délivre un résultat de fonction de base $R_{fb}^i$ généré à partir de l'erreur $E_{rr}$ à minimiser, avec i compris entre 1 et N.

Chaque bloc de la pluralité de blocs de commutation $\alpha_1, ..., \alpha_N$ comprend respectivement un coefficient de commutation $\alpha_1, ..., \alpha_N$. Les coefficients de commutation proviennent du premier signal de commutation $S_{C1}$.

Chaque bloc de la pluralité de blocs 3523 de multiplication comprend une fonction de multiplication. Chaque bloc 3523 est ainsi adapté pour recevoir un coefficient de commutation $\alpha_i$ et un résultat $R_{fb}^i$ En sortie le bloc 2523 délivre le produit du coefficient de commutation $\alpha_i$ avec le résultat $R_{fb}^i$, c'est-à-dire $\alpha_{i*} R_{fb}^i$.

Chaque bloc 3524 de sommation est adapté pour recevoir le produit d'un coefficient de commutation $\alpha_i$ avec un résultat $R_{fb}^i$ d'un bloc 3522' de fonction de base associé. Les différents résultats sont sommés par les différents blocs 3524 pour délivrer la première commande particulière $D_{P1}$. Ainsi, on peut écrire la relation suivante :

$$D_{P1} = \sum_{i=1}^{N} \alpha_i * R_{fb}^i$$

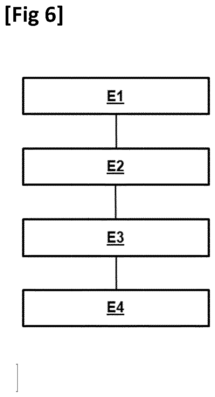

La méthode de supervision pour le contrôle du véhicule automobile autonome 10 est décrite par la suite à l'appui des figures 4 à 5 et de la figure 6.

Sur la figure 6, dans une étape E1, une décision générale $D_G$ de contrôle est reçue par le bloc 351 de génération de coefficients de commutation. Cette décision générale $D_G$ a été préalablement générée à partir d'une pluralité de données d'entrée data per, data nav, data loc.

Dans une étape E2, les coefficients de commutation $\alpha_1, ..., \alpha_N$ ; $\alpha'_1, ..., \alpha'_N$ ; $\alpha''_1, ..., \alpha''_N$ sont générés à partir de la décision générale de contrôle $D_G$.

Dans une étape E3, des commandes particulières $D_{P1}, D_{P2}, D_{P3}$ de contrôle sont générées à partir de fonctions de base $3522^1, ..., 3522^N$ du type de supervision considéré (supervision longitudinale, supervision latérale, supervision de suspension). Les fonctions de base $3522^1, ..., 3522^N$ sont pondérées par les coefficients de commutation respectifs $\alpha_1, ..., \alpha_N$; $\alpha'_1, ..., \alpha'_N$ ; $\alpha''_1, ..., \alpha''_N$ liés au type de supervision correspondant. Pour rappel, chaque fonction de base représente un contrôleur conçu spécifiquement pour un fonctionnement particulier du véhicule automobile autonome.

Dans une étape E4, la commande longitudinale 355, la commande latérale 356 et la commande de suspension 357 transmettent respectivement les commandes K1, K2, K3 au bloc 34 de génération d'une décision.

Dans un mode de réalisation particulier, l'étape de génération E3 de la commande particulière utilise un schéma de paramétrisation de Youla-Kucera.

Un tel schéma permet de paramétrer un ensemble de contrôleurs stabilisateurs. Les contrôleurs paramétrés sont ensuite interpolés à l'aide des signaux de commutation $S_{C1}$, $S_{C2}$, $S_{C3}$. Les coefficients de commutation $\alpha_1, ..., \alpha_N ; \alpha'_1, ..., \alpha'_N ; \alpha''_1, ..., \alpha''_N$ peuvent décrire n'importe quel paramètre physique, tel que le modèle du véhicule, une commande dépendante, les préférences du conducteur ou tout autre type d'information. Ce schéma de paramétrisation permet d'obtenir des commandes particulières $D_{P1}$, $D_{P2}$, $D_{P3}$ stables même si les changements des coefficients de commutation $\alpha_1, ..., \alpha_N ; \alpha'_1, ..., \alpha'_N ; \alpha''_1, ..., \alpha''_N$ sont fréquents.

La méthode de supervision pour le contrôle du véhicule automobile autonome et le dispositif de supervision associé permettent ainsi d'obtenir :

- un système intelligent capable de trouver la meilleur combinaison entre plusieurs fonctions de base de plusieurs contrôleurs pour obtenir des performances élevées et une grande robustesse ;
- un système pouvant lire tout type de signal (caractère, virgule flottante, nombre binaire) et les traduire en signaux de commutation ;
- un système pouvant être appliqué à toutes les tâches de conduite autonome de type longitudinale, latérale, ou de suspension ;
- un système compatible avec tout système décisionnel et pouvant être connecté à tout système de contrôle de production ADAS/AD ;
- une conduite d'un véhicule autonome à la manière d'un humain dans des situations critiques où les meilleures combinaisons de commande sont choisies en fonction des paramètres de rétroaction en ligne ;
- un véhicule qui roule en douceur en cas de bruits importants ou d'erreurs causés par des capteurs ou l'état de la route ;
- un système pouvant être également utilisé pour démarrer le mode autonome avec des erreurs latérales initiales importantes ;
- un système de supervision de contrôle qui aide à réguler tous les paramètres du véhicule en fonction de l'état et des capacités de l'actionneur.

L'invention concerne également un produit programme d'ordinateur comportant des instructions de programme exploitables par le système de supervision 30, qui lorsqu'elles sont exécutées ou interprétées par ledit système de supervision 30 déclenchent la mise en oeuvre de la méthode de contrôle telle que décrite à la figure 5.

L'invention concerne également un véhicule automobile 10 comprenant le système de supervision 30. Ce véhicule automobile est un véhicule de tourisme, comme il est représenté sur la figure 1 et la figure 2. En variante, le véhicule automobile est un tout autre véhicule tel qu'un bus ou un camion.

L'invention n'est pas limitée aux modes de réalisation et variantes présentées et d'autres modes de réalisation et variantes apparaîtront clairement à l'homme du métier.

**Revendications**

1. Méthode de supervision pour le contrôle d'un véhicule automobile autonome (10) selon au moins deux types de supervision, ladite méthode de supervision comprenant :

   - une étape (E1) de réception d'une décision générale ($D_G$) de contrôle générées à partir d'une pluralité de données d'entrée (data per, data nav, data loc) ;
   - une étape (E4) de transmission d'une pluralité de commandes particulières ($D_{P1}$, $D_{P2}$, $D_{P3}$) de contrôle, chaque commande particulière ($D_{P1}$, $D_{P2}$, $D_{P3}$) de contrôle étant associée à une des aux moins deux types de supervision ;

   **caractérisée en ce que** ladite méthode de supervision comprend, préalablement à l'étape de transmission de la pluralité de commandes particulières ($D_{P1}$, $D_{P2}$, $D_{P3}$) de contrôle :

   - une étape (E2) de génération de coefficients de commutation ($\alpha_1, ..., \alpha_N; \alpha'_1, ..., \alpha'_N ; \alpha''_1, ..., \alpha''_N$) à partir de la décision générale de contrôle ($D_G$),
   - pour chaque commande particulière de contrôle, une étape (E3) de génération de ladite commande particulière ($D_{P1}$, $D_{P2}$, $D_{P3}$) de contrôle à partir de fonctions de base ($3522^1, ..., 3522^N$) du type de supervision considéré, lesdites fonctions de base ($3522^1, ..., 3522^N$) étant pondérées par tout ou partie des coefficients de commutation ($\alpha_1, ..., \alpha_N ; \alpha'_1, ..., \alpha'_N ; \alpha''_1, ..., \alpha''_N$), chaque fonction de base ($3522^1, ..., 3522^N$) étant représentative d'un contrôleur conçu spécifiquement pour un fonctionnement particulier du véhicule automobile autonome.

2. Méthode de supervision selon la revendication 1, dans laquelle les données d'entrée sont choisies parmi une liste de données d'entrée comprenant :

   - des données de perception (data per) ;
   - des données de navigation (data nav) ;
   - des données de localisation (data loc).

3. Méthode de supervision selon l'une quelconque des revendications 1 ou 2, dans laquelle les au moins deux types de supervision sont choisis parmi une liste de types de supervision comprenant :

- une supervision longitudinale ;
- une supervision latérale ;
- une supervision de suspension.

4. Méthode de supervision selon l'une quelconque des revendications 1 à 3, dans laquelle chaque coefficient de commutation $(\alpha_1, ..., \alpha_N; \alpha'_1, ..., \alpha'_N ; \alpha''_1, ..., \alpha''_N)$ ayant une valeur comprise entre zéro et un, la somme des coefficients de commutation $(\alpha_1, ..., \alpha_N ; \alpha'_1, ..., \alpha'_N ; \alpha''_1, ..., \alpha''_N)$ utilisés pour la génération de la commande particulière $(D_{P1}, D_{P2}, D_{P3})$ est égale à un.

5. Méthode de supervision selon l'une quelconque des revendications 1 à 4, dans laquelle l'étape de génération de la commande particulière $(D_{P1}, D_{P2}, D_{P3})$ utilise un schéma de paramétrisation de Youla-Kucera.

6. Méthode de supervision selon l'une quelconque des revendications 1 à 5, dans lequel les coefficients de commutation $(\alpha_1, ..., \alpha_N)$ appartiennent à un signal de commutation $(S_{C1})$, ledit signal de commutation comprenant une liste de caractères et/ou de virgules flottantes et/ou de nombres binaires.

7. Dispositif de supervision pour le contrôle d'un véhicule automobile autonome (10) à partir d'au moins deux types de supervision, ledit dispositif de supervision comprenant :

- un bloc (351) de génération de coefficients de commutation $(\alpha_1, ..., \alpha_N; \alpha'_1, ..., \alpha'_N ; \alpha''_1, ..., \alpha''_N)$ à partir d'une décision générale $(D_G)$ de contrôle reçue par ledit bloc, ladite décision générale $(D_G)$ de contrôle étant générée préalablement à partir d'une pluralité de données d'entrée (data par, data nav, data loc) ;
- au moins un bloc de supervision (352, 353, 354) d'un des deux types de supervision, ledit bloc de supervision (352, 353, 354) étant adapté pour générer une commande particulière $(D_{P1}, D_{P2}, D_{P3})$ à partir de fonctions de base $(3522^1, ..., 3522^N)$ du type de supervision considéré, lesdites fonctions de base $(3522^1, ..., 3522^N)$ étant pondérées par tout ou partie des coefficients de commutation $(\alpha_1, ..., \alpha_N ; \alpha'_1, ..., \alpha'_N ; \alpha''_1, ..., \alpha''_N)$, chaque fonction de base $(3522^1, ..., 3522^N)$ étant représentative d'un contrôleur conçu spécifiquement pour un fonctionnement particulier du véhicule autonome pour le type de supervision considéré.

8. Produit programme d'ordinateur comportant des instructions de programme exploitables par le dispositif de supervision (30) de la revendication 7, qui lorsqu'elles sont exécutées ou interprétées par ledit dispositif de supervision (30) déclenchent la mise en oeuvre de la méthode de supervision selon l'une quelconque des revendications 1 à 6 dans un véhicule automobile autonome.

9. Véhicule automobile autonome comportant un dispositif de supervision (30) selon la revendication 7.

**Patentansprüche**

1. Überwachungsverfahren zur Steuerung eines autonomen Kraftfahrzeugs (10) gemäß mindestens zwei Überwachungsarten, wobei das Überwachungsverfahren umfasst:

- einen Schritt (E1) des Empfangens einer allgemeinen Steuerungsentscheidung $(D_G)$, die ausgehend von einer Mehrzahl von Eingangsdaten (data per, data nav, data loc) erzeugt wird;
- einen Schritt (E4) des Übertragens einer Mehrzahl von besonderen Steuerungsbefehlen $(D_{P1}, D_{P2}, D_{P3})$, wobei jeder besondere Steuerungsbefehl $(D_{P1}, D_{P2}, D_{P3})$ einer der mindestens zwei Überwachungsarten zugeordnet ist; **dadurch gekennzeichnet, dass** das Überwachungsverfahren, vor dem Schritt des Übertragens der Mehrzahl von besonderen Steuerungsbefehlen $(D_{P1}, D_{P2}, D_{P3})$, umfasst:
- einen Schritt (E2) des Erzeugens von Schaltkoeffizienten $(\alpha_1, ..., \alpha_N; \alpha'_1, ..., \alpha'_N; \alpha''_1, ..., \alpha''_N)$ ausgehend von der allgemeinen Steuerungsentscheidung $(D_G)$ ;
- für jeden besonderen Steuerungsbefehl einen Schritt (E3) des Erzeugens des besonderen Steuerungsbefehls $(D_{P1}, D_{P2}, D_{P3})$ ausgehend von Basisfunktionen $(3522^1, ..., 3522^N)$ der betrachteten Überwachungsart, wobei die Basisfunktionen $(3522^1, ..., 3522^N)$ von allen oder einem Teil der Schaltkoeffizienten $(\alpha_1, ..., \alpha_N; \alpha'_1, ..., \alpha'_N; \alpha''_2, ..., \alpha''_N)$ gewichtet werden, wobei jede Basisfunktion $(3522^1, ..., 3522^N)$ für einen Controller repräsentativ ist, der speziell für eine besondere Funktionsweise des autonomen Kraftfahrzeugs konzipiert ist.

2. Überwachungsverfahren nach Anspruch 1, wobei die Eingangsdaten aus einer Eingangsdatenliste ausgewählt sind, umfassend:

- Wahrnehmungsdaten (data per);
- Navigationsdaten (data nav);
- Ortungsdaten (data loc).

3. Überwachungsverfahren nach einem der Ansprüche 1 oder 2, wobei die mindestens zwei Überwachungsarten aus einer Überwachungsartenliste ausgewählt sind, umfassend:

- eine Längsüberwachung;
- eine Seitenüberwachung;
- eine Aufhängungsüberwachung.

4. Überwachungsverfahren nach einem der Ansprüche 1 bis 3, wobei jeder Schaltkoeffizient ($\alpha_1$, ..., $\alpha_N$; $\alpha'_1$, ..., $\alpha'_N$; $\alpha''_1$, ..., $\alpha''_N$) einen Wert zwischen null und eins hat, wobei die Summe der Schaltkoeffizienten ($\alpha_1$, ..., $\alpha_N$; $\alpha'_1$, ..., $\alpha'_N$; $\alpha''_1$, ..., $\alpha''_N$), die zum Erzeugen des besonderen Befehls ($D_{P1}$, $D_{P2}$, $D_{P3}$) verwendet werden, gleich eins ist.

5. Überwachungsverfahren nach einem der Ansprüche 1 bis 4, wobei der Schritt des Erzeugens des besonderen Befehls ($D_{P1}$, $D_{P2}$, $D_{P3}$) ein Youla-Kucera-Parametrierungsschema verwendet.

6. Überwachungsverfahren nach einem der Ansprüche 1 bis 5, wobei die Schaltkoeffizienten ($\alpha_1$, ..., $\alpha_N$) zu einem Schaltsignal ($S_{C1}$) gehören, wobei das Schaltsignal eine Liste mit Zeichen und/oder mit Gleitkommata und/oder mit Binärzahlen umfasst.

7. Überwachungsvorrichtung zur Steuerung eines autonomen Kraftfahrzeugs (10) ausgehend von mindestens zwei Überwachungsarten, wobei die Überwachungsvorrichtung umfasst:

- einen Block (351) zur Erzeugung von Schaltkoeffizienten ($\alpha_1$, ..., $\alpha_N$; $\alpha'_1$, ..., $\alpha'_N$; $\alpha''_1$, ..., $\alpha''_N$) ausgehend von einer allgemeinen Steuerungsentscheidung ($D_G$), die von dem Block empfangen wird, wobei die allgemeine Steuerungsentscheidung ($D_G$) zuvor ausgehend von einer Mehrzahl von Eingangsdaten (data par, data nav, data loc) erzeugt wird;
- mindestens einen Block zur Überwachung (352, 353, 354) einer der beiden Überwachungsarten, wobei der Block zur Überwachung (352, 353, 354) geeignet ist, einen besonderen Befehl ($D_{P1}$, $D_{P2}$, $D_{P3}$) ausgehend von Basisfunktionen ($3522^1$, ..., $3522^N$) der betrachteten Überwachungsart zu erzeugen, wobei die Basisfunktionen ($3522^1$, ..., $3522^N$) von allen oder einem Teil der Schaltkoeffizienten ($\alpha_1$, ..., $\alpha_N$; $\alpha'_1$, ..., $\alpha'_N$; $\alpha''_1$, ..., $\alpha''_N$) gewichtet werden, wobei jede Basisfunktion ($3522^1$, ..., $3522^N$) für einen Controller repräsentativ ist, der speziell für eine besondere Funktionsweise des autonomen Fahrzeugs für die betrachtete Überwachungsart konzipiert ist.

8. Computerprogrammprodukt mit von der Überwachungsvorrichtung (30) des Anspruchs 7 verarbeitbaren Programmanweisungen, die, wenn sie von der Überwachungsvorrichtung (30) ausgeführt oder interpretiert werden, die Durchführung des Überwachungsverfahrens nach einem der Ansprüche 1 bis 6 in einem autonomen Kraftfahrzeug auslösen.

9. Autonomes Kraftfahrzeug mit einer Überwachungsvorrichtung (30) nach Anspruch 7.

**Claims**

1. Monitoring method for controlling an autonomous motor vehicle (10) according to at least two types of monitoring, said monitoring method comprising:

- a step (E1) of receiving a general control decision ($D_G$) generated on the basis of a plurality of input data (data per, data nav, data loc);
- a step (E4) of transmitting a plurality of particular control commands ($D_{P1}$, $D_{P2}$, $D_{P3}$), each particular control command ($D_{P1}$, $D_{P2}$, $D_{P3}$) being associated with one of the at least two types of monitoring; **characterized in that** said monitoring method comprises, prior to the step of transmitting the plurality of particular control commands ($D_{P1}$, $D_{P2}$, $D_{P3}$):
- a step (E2) of generating switching coefficients ($\alpha_1$, ..., $\alpha_N$; $\alpha'_1$, ..., $\alpha'_N$; $\alpha''_1$, ..., $\alpha''_N$) on the basis of the general control decision ($D_G$);
- for each particular control command, a step (E3) of generating said particular control command ($D_{P1}$, $D_{P2}$, $D_{P3}$) on the basis of basic functions ($3522^1$, ..., $3522^N$) of the type of monitoring under consideration, said basic functions ($3522^1$, ..., $3522^N$) being weighted by all or some of the switching coefficients ($\alpha_1$, ..., $\alpha_N$; $\alpha'_1$, ..., $\alpha'_N$; $\alpha''_1$, ..., $\alpha''_N$), each basic function ($3522^1$, ..., $3522^N$) being representative of a controller designed specifically for a particular operating mode of the autonomous motor vehicle.

2. Monitoring method according to Claim 1, wherein the input data are chosen from a list of input data comprising:

- perception data (data per);
- navigation data (data nav);
- location data (data loc).

3. Monitoring method according to either one of Claims 1 and 2, wherein the at least two types of monitoring are chosen from a list of types of monitoring comprising:

- longitudinal monitoring;
- lateral monitoring;

- suspension monitoring.

4. Monitoring method according to any one of Claims 1 to 3, wherein, each switching coefficient ($\alpha_1$, ..., $\alpha_N$; $\alpha'_1$, ..., $\alpha'_N$; $\alpha''_1$, ..., $\alpha''_N$) having a value between zero and one, the sum of the switching coefficients ($\alpha_1$, ..., $\alpha_N$; $\alpha'_1$, ..., $\alpha'_N$; $\alpha''_1$, ..., $\alpha''_N$) which are used for generating the particular command ($D_{P1}$, $D_{P2}$, $D_{P3}$) is equal to one.

5. Monitoring method according to any one of Claims 1 to 4, wherein the step of generating the particular command ($D_{P1}$, $D_{P2}$, $D_{P3}$) uses a Youla-Kučera parametrization scheme.

6. Monitoring method according to any one of Claims 1 to 5, wherein the switching coefficients ($\alpha_1$, ..., $\alpha_N$) belong to a switching signal ($S_{C1}$), said switching signal comprising a list of characters and/or floating points and/or binary numbers.

7. Monitoring device for controlling an autonomous motor vehicle (10) on the basis of at least two types of monitoring, said monitoring device comprising:

   - a block (351) for generating switching coefficients ($\alpha_1$, ..., $\alpha_N$; $\alpha'_1$, ..., $\alpha'_N$; $\alpha''_1$, ..., $\alpha''_N$) on the basis of a general control decision ($D_G$) received by said block, said general control decision ($D_G$) being generated beforehand on the basis of a plurality of input data (data per, data nav, data loc);
   - at least one monitoring block (352, 353, 354) of one of the two types of monitoring, said monitoring block (352, 353, 354) being adapted to generate a particular command ($D_{P1}$, $D_{P2}$, $D_{P3}$) on the basis of basic functions ($3522^1$, ..., $3522^N$) of the type of monitoring under consideration, said basic functions ($3522^1$, ..., $3522^N$) being weighted by all or some of the switching coefficients ($\alpha_1$, ..., $\alpha_N$; $\alpha'_1$, ..., $\alpha'_N$; $\alpha''_1$, ..., $\alpha''_N$) , each basic function ($3522^1$, ..., $3522^N$) being representative of a controller designed specifically for a particular operating mode of the autonomous vehicle for the type of monitoring under consideration.

8. Computer program product comprising program instructions which may be used by the monitoring device (30) of Claim 7 and which, when they are executed or interpreted by said monitoring device (30), trigger the implementation of the monitoring method according to any one of Claims 1 to 6 in an autonomous motor vehicle.

9. Autonomous motor vehicle comprising a monitoring device (30) according to Claim 7.

[Fig 1]

[Fig 2]

[Fig 3]

[Fig 4]

352

[Fig 5]

35

[Fig 6]

```
┌─────────────────────────────┐
│             E1              │
└─────────────────────────────┘
              │
┌─────────────────────────────┐
│             E2              │
└─────────────────────────────┘
              │
┌─────────────────────────────┐
│             E3              │
└─────────────────────────────┘
              │
┌─────────────────────────────┐
│             E4              │
└─────────────────────────────┘
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3514651 A

- US 2019001976 A